Europäisches Patentamt

European Patent Office

Office européen des brevets

(11) Publication number: **0 261 431**
A1

# EUROPEAN PATENT APPLICATION

(21) Application number: 87112420.2

(51) Int. Cl.⁴: **F16H 25/22**

(22) Date of filing: 26.08.87

(30) Priority: 27.08.86 CA 516607

(43) Date of publication of application:
30.03.88 Bulletin 88/13

(84) Designated Contracting States:
DE ES FR GB IT NL SE

(71) Applicant: Menasco Aerospace Ltd
1400 South Service Road, West
Oakville Ontario L6L 5Y7(CA)

(72) Inventor: Farnsworth, John C.R.
406 Crepeau Apt. 314
Saint Laurent Quebec H4N 1N3(CA)

(74) Representative: Fincke, Karl Theodor,
Dipl.-Phys.Dr. et al
Patentanwälte Dipl.-Ing. H.Weickmann
Dipl.-Phys.Dr. K.Fincke Dipl.-Ing.
F.A.Weickmann Dipl.-Chem. B. Huber Dr. Ing.
H. Liska Dipl.-Phys.Dr. J. Prechtel Postfach
860820
D-8000 München 86(DE)

(54) A ball bearing screw and nut assembly.

(57) A ball bearing screw and nut assembly, particularly for use in aircraft, includes a channel-forming ball return guide (12) having a channel member extending transversely of the longitudinal axis of the assembly. The internal radial dimension of the channel member is substantially equal to the diameter of each ball (10) to define a recirculating passage of constant dimensions with the external surface of the nut (6). End passages are provided through the wall of the nut (6) at each end of the channel member (12) connecting the recirculating passage and the helical channel formed between the screw (2) and nut (6). The external surface of the nut is smooth and unaltered between the end passages.

Fig. 2

Xerox Copy Centre

This invention relates to ball bearing screw and nut assemblies, particularly for use in aircraft.

## BACKGROUND OF THE INVENTION

There have been many proposals for the manufacture of a recirculating ball-bearing screw and nut mechanism of the kind in which the screw of the mechanism comprises a shaft which has an external helical groove. A cooperating nut comprises a tubular sleeve encircling the shaft and having an internal helical groove which defines a helical working track with the groove of the shaft. A plurality of friction-reducing ball bearings run in the helical working track to effect cooperation between the nut and the screw. As is well known, the balls move from one end to the other of the working track during relative rotation of the nut and screw and are returned from said other to said one end of the working track by way of a recirculating track. In some arrangements the recirculating track may be cut into the external surface of the nut body or drilled therethrough. Thus the thickness of the nut body is interfered with and may be considerably reduced by the track cut into, or through, the nut body. In other proposals, an external tube has been provided to facilitate recirculation of the ball bearings.

## SUMMARY OF THE INVENTION

It is an object of the present invention to provide an improved ball bearing screw and nut assembly wherein the above-mentioned reduction of the nut body is not present.

According to the present invention there is provided a ball bearing screw and nut assembly comprising, a screw formed with a helical groove, a tubular nut body around said screw formed with an internal helical groove having a radius of curvature co-operating with said screw groove to define a helical channel, a plurality of anti-friction balls in said helical channel inter-connecting said nut body and screw whereby relative rotation therebetween provides relative axial motion, a cast stool channel-forming ball return guide mounted on the external surface of said nut body, said channel-forming ball return guide comprising a channel member extending transversely of the longitudinal axis of said assembly between first and second integral end portions, the internal radial dimension of said channel member being substantially equal to the diameter of each of said balls to define a recirculating passage of constant dimensions with the external surface of said nut body, and end passages through the wall of said nut body at each end of said channel member connecting the ends of said helical channel and said recirculating passage, said external surface being substantially smooth and unaltered between said end passages.

## DESCRIPTION OF THE DRAWINGS

Figure 1 is a diagrammatic representation of a ball bearing screw and nut assembly according to one embodiment of the invention,

Figure 2 is a longitudinal cross-sectional view of the assembly of Figure 1 taken on the line II-II of Figure 1, and

Figure 3 is a cross-sectional view of the assembly of Figure 1 taken on the lines III-III of Figure 1 and rotated through 90°.

## DESCRIPTION OF THE PREFERRED EMBODIMENT

Referring to the drawings, a ball-bearing screw 2 is formed with a helical groove 4 which projects through a tubular nut body 6 around the elongate screw 2. The nut body 6 is formed with a helical groove 8, as shown in Figure 2, which cooperates with the groove 4 to define a helical channel filled with anti-friction balls 10. The balls 10 interconnect the nut body 6 and the screw 2 in a conventional manner to permit relative axial movement therebetween when there is relative rotational motion between the nut body 6 and the screw 2.

As is well known, it is necessary to provide a recirculating means connecting the ends of the helical channel so that an endless circuit of balls 10 is contained within the nut body 6. In one prior arrangement this has been achieved by providing an external tube through which the balls pass. After a number of load-carrying turns, it has been found that it is difficult to maintain the form of the tube. In particular, both ends become subject to heavy wear and an externally damaged thin-walled tube causes jamming of the ball circuit. Accurate shimming between ball nut and return tube is required to ensure non-jamming conditions whilst attachment of the tube can only be achieved by a strapping technique. In order to reduce, or substantially obviate, the disadvantage of the just-described mechanism, I utilize the substantially smooth and unaltered external surface of the nut body 6 without the provision of any grooves therein or any external recirculating tube.

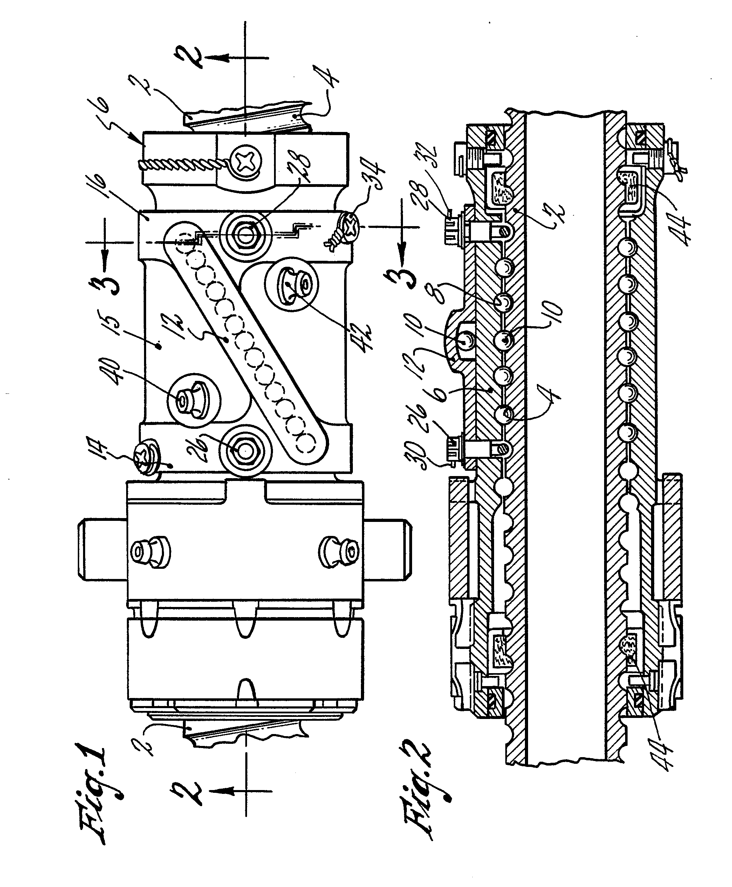

In order to recirculate the balls 10, I provide a channel-forming ball return guide member comprising a channel member 12 extending transversely of the longitudinal axis of the nut and screw assembly as shown in Figure 1. The channel member 12 is a steel investment casting and extends transversely of the longitudinal axis of the assembly between first and second integral end portions 14 and 16, the whole being cast as one unit. The portion 15 between the end portions 14 and 16 is of less thickness than the end portions.

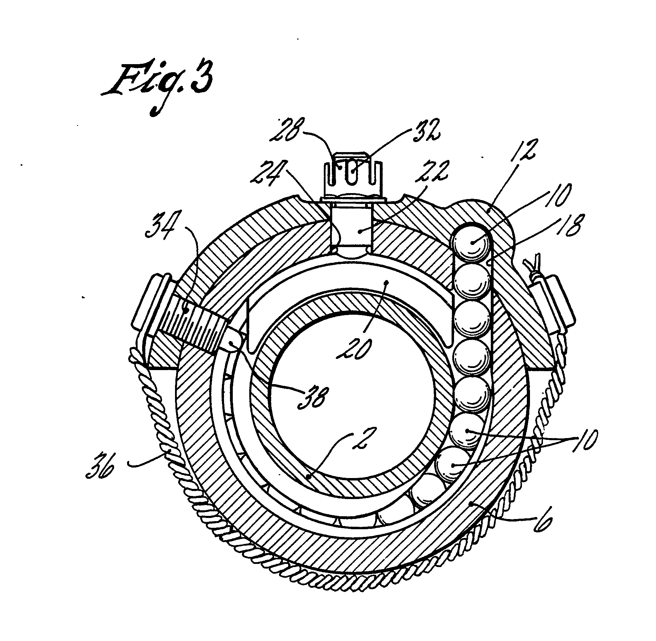

Referring to Figure 2, it will be seen that the channel member 12 has an internal radial dimension substantially equal to the diameter of each of the balls 10 so as to define a recirculating passage of constant dimensions with the external surface of the nut body. The channel member 12 communicates with the helical channel, formed by helical grooves 4 and 8, by way of end passages, such as 18, through the wall of the nut body 6 at each end of the channel member 12 (see Figure 3).

Ball deflectors, such as 20 (Figure 3), are provided at each end of the helical channel so as to deflect the balls 10 as they move around the helical channel 4,8. Each ball deflector 20 is in the shape of a short helical portion, as illustrated, of generally circular cross-section adapted to extend into the thread formed on the screw 2. Each of the ball deflectors has a stem or stud 22 adapted to extend through a radial passage 24 as shown in Figure 3. The outer end of each stem 22 is threaded and operates to maintain the channel member 12 in position after a respective threaded castellated self-locking nut 26 or 28 is fastened down. The cotter pin 30 or 32 is used to ensure extra security of the self-locking nut 26 or 28 respectively.

As will be apparent from Figure 3, the ball deflector 20 is adapted to engage balls 10 moving anti-clockwise and to cause those balls to move outwardly through end passage 18. The balls 10 then traverse the recirculating passage formed by channel member 12 to the other end of the recirculating passage where they are deflected inwards through a corresponding end passage and again enter into engagement with the helical channel formed by the grooves 4 and 8. When reverse relative rotation occurs between the screw 2 and nut body 6, the balls 10 move in the opposite direction in the recirculating passage formed by channel member 12.

The described embodiment of the invention is particularly designed for use in aircraft applications where one is particularly concerned with safety and strength of the components due to the high loads encountered. In some prior arrangements weakness of components has been a disadvantage. Hence, in the described embodiment channel member 12 is a steel investment casting. The process used is a precision casting process requiring minimum machining. Also, in some prior arrangements it has been found that items, such as the balls, may break and interfere with, or jam the operation of the ball bearing screw and nut assembly. If broken balls jam, they could result in breaking the stud 22 off the ball deflector 20 whereby the ball deflector 20 would slide round. In some instances where this has happened, ball return tubes have been forced out of position and all the balls have been lost from the ball and screw assembly. Since there may be several such assemblies used in an aircraft, this can be a serious problem.

I have discovered that the disastrous results of the above problem can be reduced by providing a spherical ended screw or bolt 34 through the channel member 12 and the nut 6. For safety reasons the screw 34 is provided with a locking wire 36. If by some mischance the balls 10 are all jammed up and result in the breaking of stem 22, then the ball deflector 20 will just slide a small distance until it encounters the semi-spherical end 38 of the screw member 34. The movement of the ball deflector 20 will be arrested by the semi-spherical end 38 of screw 34 so that the ball bearing screw and nut assembly can continue to function. This is particularly important when, for example, the screw and nut assembly is used to operate the flaps of an aircraft. If desired, further retention screws such as 34 could be provided at other circumferential locations.

Grease fittings are also provided, for example 40 and 42, in appropriate recesses as shown in Figure 1.

In the illustrated assembly for aircraft, additional components, such as wipers or scrapers 44, are provided.

It will be readily apparent to a person skilled in the art that a number of variations and modifications can be made without departing from the true spirit of the invention which will now be pointed out in the appended claims.

## Claims

The embodiments of the invention in which an exclusive property or privilege is claimed are defined as follows:-

1. A ball bearing screw and nut assembly comprising:

(a) a screw formed with a helical groove,

(b) a tubular nut body around said screw formed with an internal helical groove having a radius of curvature co-operating with said screw groove to define a helical channel,

(c) a plurality of anti-friction balls in said helical channel interconnecting said nut body and screw whereby relative rotation therebetween provides relative axial motion,

(d) a cast steel channel-forming ball return guide mounted on the external surface of said nut body,

(e) said channel-forming ball return guide comprising a channel member extending transversely of the longitudinal axis of said assembly between first and second integral end portions, the internal radial dimension of said channel member being substantially equal to the diameter of each of said balls to define a recirculating passage of constant dimensions with the external surface of said nut body, and

(f) end passages through the wall of said nut body at each end of said channel member connecting the ends of said helical channel and said recirculating passage, said external surface being substantially smooth and unaltered between said end passages.

2. A ball bearing screw and nut assembly according to claim 1 including a cotter pin through each said stem for additional locking of each said self-locking nut.

3. A ball bearing screw and nut assembly according to claim 1 including a ball deflector at each end of said helical channel, said ball deflectors each having a stem adapted to extend through a respective radial opening in said nut body and through a respective one of said first and second end portions, and a self-locking nut on the external end of each stem to hold said channel forming ball return guide in position.

4. A ball bearing screw and nut assembly according to claim 3 including a member circumferentially spaced from each ball deflector in a direction away from said balls and protruding through said return guide and said nut body to restrict movement of the respective ball deflector.

5. A ball bearing screw and nut assembly according to claim 4 wherein the inner end of each said member is semi-spherical.

6. A ball nut for association with an elongate ball screw, said nut being generally of tubular configuration provided with an internal ball receiving threaded groove to define a helical channel, said nut having end passages at each end of said channel extending substantially radially from said helical channel to the exterior surface of said nut, the exterior surface of said nut being substantially smooth and unaltered between said end passages, a return guide member of investment cast steel overlying the portion of said external surface between said end passages to form a recirculating passage of constant dimensions between said end passages.

7. A ball nut for association with an elongate ball screw, said nut being generally of tubular configuration provided with an internal ball receiving threaded groove to define a helical channel, said nut having end passages at each end of said channel extending substantially radially from said helical channel to the exterior surface of said nut, the exterior surface of said nut being substantially smooth and unaltered between said end passages, a return guide member of investment cast steel overlying the portion of said external surface between said end passages to form a recirculating passage of constant dimensions between said end passages, a ball deflector at each end of said helical channel, said ball deflectors each having a stem adapted to extend through a respective radial opening in said nut and through a respective end portion integral with said return guide member, a member circumferentially spaced from each ball deflector in a direction away from the respective end passage and protruding through said return guide member and said nut to restrict movement of the respective ball deflector.

Fig.1

Fig.2

*Fig. 3*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.3) |
|---|---|---|---|
| Y | US-A-2 925 744 (FOLKERTS)<br>* column 2, lines 27-68; figures 1-6 * | 1,6 | F 16 H 25/22 |
| Y | GB-A-1 468 607 (LA TECHNIQUE INTEGRALE)<br>* page 1, line 46 - page 2, line 8; figure 4 * | 1,6 | |
| A | US-A-3 399 581 (VALENTI et al.)<br>* column 3, line 61 - column 5, line 25; figures 1-4 * | 1,3,6,7 | |
| A | DE-A-2 715 762 (POLITECHNIKA WARSZAWSKA)<br>* claims 1, 2; figures 1-5 * | 1,6 | |
| A | US-A-3 661 030 (GAGNE)<br>* complete document * | 1,3,6,7 | |
| A | FR-A-2 204 270 (LA TECHNIQUE INTEGRALE)<br>* page 8, lines 8-37; figures 1-4 * | 3,4 | TECHNICAL FIELDS SEARCHED (Int. Cl.3)<br><br>F 16 H 25/00 |

The present search report has been drawn up for all claims

| Place of search | Date of completion of the search | Examiner |
|---|---|---|
| BERLIN | 20-11-1987 | LEMBLE Y.A.F.M. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P0401)